# EUROPEAN PATENT SPECIFICATION

(11) **EP 1 392 031 B1**
(45) Date of publication and mention of the grant of the patent: **29.10.2008**
(21) Application number: 03254893.5
(22) Date of filing: 06.08.2003
(51) Int. Cl.: H04L 27/227, H04B 1/707

(54) **Fading frequency estimation apparatus**
Schwundfrequenzschätzungsvorrichtung
Dispositif pour l'estimation de fréquence d'évanouissement

(30) Priority: 23.08.2002 JP 2002242793
(43) Date of publication of application: 25.02.2004
(73) Proprietor: FUJITSU LIMITED, Kawasaki-shi, Kanagawa 211-8588 (JP)
(72) Inventor: Miyazaki, Shunji, Fujitsu Limited, Kawasaki-shi, Kanagawa 211-8588 (JP); Obuchi, Kazuhisa, Fujitsu Limited, Kawasaki-shi, Kanagawa 211-8588 (JP); Nakamura, Takaharu, Fujitsu Limited, Kawasaki-shi, Kanagawa 211-8588 (JP)
(74) Representative: Stebbing, Timothy Charles

(56) References cited:
- EP-A- 1 089 451
- WO-A-00/11798
- US-A- 6 067 315
- PATENT ABSTRACTS OF JAPAN vol. 2002, no. 04, 4 August 2002 (2002-08-04) & JP 2001 358621 A (FUJITSU LTD), 26 December 2001 (2001-12-26)

## Description

This invention relates to an apparatus for estimating fading frequency in a Code-Division Multiple Access (CDMA) mobile communications system. More particularly, the invention relates to an apparatus for estimating fading frequency from a fluctuation in received code signal power.

A radio signal is affected in various ways by fading in the course of signal propagation from a transmitter to a receiver, as a result of which the reception level fluctuates. This degrades the signal to noise (S/N) ratio, raises the error rate and diminishes signal quality. For this reason, fading countermeasures have been the subject of research and a variety of diversity and signal synthesizing methods have been proposed. Thus, though fading detracts from signal quality and is therefore undesirable, various types of control based upon fading frequency have been proposed in recent years. For example, a first technique that utilizes fading frequency improves communication quality by changing over the range of power control depending upon the fading frequency. In W-CDMA, an increase or decrease in transmission power is reported to a base station by a TPC (Transmission Power Control) bit based upon power received at a mobile station, and the base station exercises transmission power control based upon the TPC bit. If the fading frequency is high, transmission power is less likely to follow up TPC-based power control and, hence, refraining from such control is preferred over execution. If the fading frequency is low, on the other hand, transmission power tends to follow up TPC-based power control and the range over which transmission power is increased or decreased can be broadened. According to the first technique, therefore, fading frequency is measured and the range of increase or decrease in transmission power based upon TPC is controlled to improve communication quality. A second technique that utilizes fading frequency estimates the travelling velocity of a mobile station from the fading frequency and lowers the frequency with which the search for a neighboring cell is conducted. Since it can be construed that the travelling velocity of a mobile station is low when the fading frequency of the mobile station is low, the search for a neighboring cell is conducted less frequently in cases where the fading frequency is low. This reduces consumption of power.

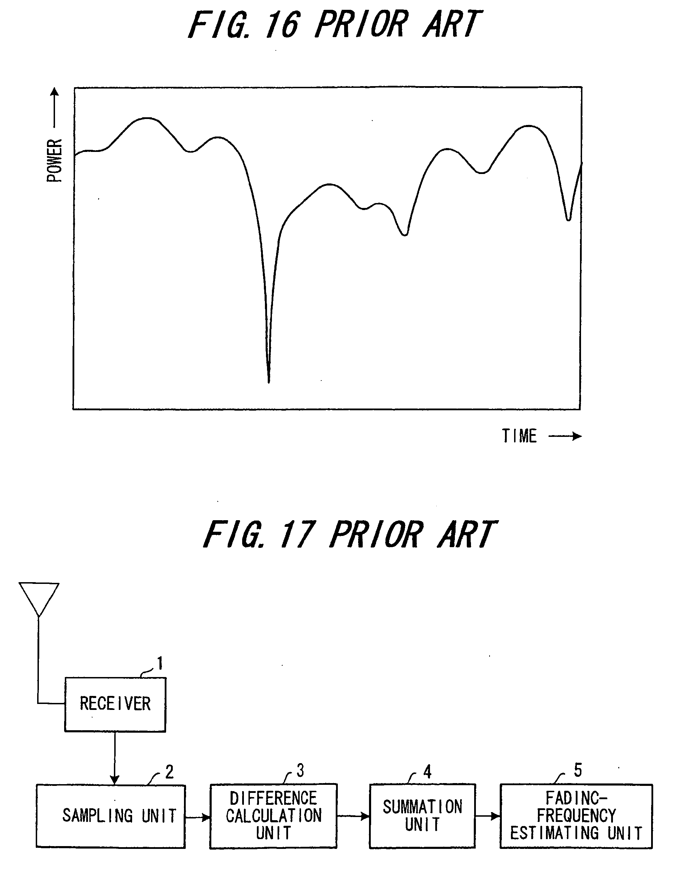

Thus, a technique for measuring fading frequency accurately is desired. Reception frequency fluctuates as shown in Fig. 16, for example, when a signal is affected by fading. As shown in Fig. 16, peaks appear with a certain periodicity, though peak height differs. Though a technique for measuring fading frequency by counting the number of peaks per prescribed time has been proposed, a problem encountered is poor measurement accuracy. Disclosed in the specification of Japanese Patent Application Laid-Open No. 8-79161 is an example of a conventional apparatus for estimating fading frequency. Fig. 17 is a block diagram illustrating this apparatus for estimating fading frequency according to the prior art. This apparatus is capable of being employed in a PDC (Personal Digital Cellular) system. The apparatus includes a receiver 1 for selecting and outputting a signal of a prescribed channel from a signal received at an antenna; a sampling unit 2 for sampling the signal, which enters from the receiver 1, at a set time interval; a difference calculation unit 3 for calculating differences between levels of mutually adjacent sampling signals; a summation unit 4 for summing the differences over a predetermined period of time; and a fading-frequency estimating unit 5 for estimating fading frequency based upon the value of the summation.

Consider the waveform of reception power shown in Fig. 16. Peak slope (gradient) is gentle when fading frequency is low and becomes steeper when fading frequency is high. Accordingly, the apparatus for estimating fading frequency shown in Fig. 17 calculates the slope of the peaks of the reception power waveform using the sampling unit 2, difference calculation unit 3 and summation unit 4 and estimates fading frequency based upon the slope calculated.

In a CDMA system, the code signals of multiple channels are multiplexed onto a received signal prior to despreading. Further, the influence of local interference ascribable to multipath and the influence of interference from other base stations owing to transmitted radio waves from these other base stations cannot be ignored. In a CDMA system, therefore, a change in the receive signal with time is not ascribable solely to fading along the propagation path; other factors are code signals on other channels and interference signals. This means that if a receive signal is merely sampled and the differences between mutually adjacent sampling values summed, as in the conventional apparatus for estimating fading frequency, the correlation between the summation values and fading frequency becomes less distinct. In other words, in the case of CDMA, fading frequency cannot be determined based upon summation values with the conventional apparatus for estimating fading frequency.

EP 1089451 discloses a channel estimating method wherein a channel estimation value of data symbols of a data channel is calculated by weighting and averaging pilot symbols in a parallel time multiplexing method.

Accordingly, it is therefore desirable that fading frequency can be measured accurately in a CDMA system.

An apparatus according to the invention is defined in independent claim 1.

By despreading the receive signal using an already known code, other multiplexed code components are eliminated. By simultaneously summing the difference power values, noise components are reduced. This makes it possible to extract only the code component of a prescribed channel in highly precise fashion. Power sampled from the code component, therefore, substantially indicates fluctuation ascribable to fading. Accordingly, the summation value of the absolute values of the differences obtained from sampled power has a correlation with respect to fading frequency and the fading frequency can be estimated based upon this summation value.

In order to estimate fading frequency from the summation value, corresponding relationships between power slope and fading frequency are stored in a table beforehand, the average value of the power differences per prescribed time is calculated as power slope from the summation value, and the fading frequency that conforms to the average value is acquired from the table.

Further, the time over which code signal power is sampled, the summation time and number of paths utilized may be changed over in accordance with the state of utilization of the estimated fading frequency. When it is desired to make a highly precise estimate of fading frequency when fading frequency is low, the sampling time interval is lengthened and summation time is increased. On the other hand, when it is desired to make a highly precise estimate of fading frequency when fading frequency is high, the sampling time interval is shortened and summation time is decreased. If a coarse precision is acceptable, summation time is decreased in either case. By making this changeover in accordance with operating conditions, system resources and power consumption can be reduced in comparison with a case where fixed parameters for maximum precision are used.

According to an embodiment of the present invention, the fading-frequency estimation apparatus is for sampling power from a channel estimation value obtained from a pilot channel, which is an already known signal, from among despread code signals. A temporal change in fading can be extracted more accurately by using this channel estimation value. This is accompanied by an improvement in the accuracy of the summation value obtained by summing the absolute values of the differences. There is also an advantage in terms of mounting cost. Specifically, the channel estimation value is essential for demodulating a received code. This means that components need not be mounted anew with regard to estimation of fading frequency.

According to a further embodiment of the present invention, the fading-frequency estimation apparatus is for obtaining the above-mentioned summation value with regard to each path of multiple paths, calculating the average value of the summation values of every path and estimating fading frequency based upon this average value.

A code signal of a prescribed channel can be obtained from each path of multiple paths by despreading, and the code signals each exhibit fading that behaves independently. The average value of summation values obtained with regard to respective ones of these paths therefore serves as a summation value measured with higher accuracy. Accordingly, fading frequency can be estimated more accurately based on the path average of the summation values.

Further, the time over which code signal power is sampled, the summation time and the number of paths utilized may be changed over in accordance with the state of utilization of the estimated fading frequency. When it is desired to make a highly precise estimate of fading frequency when fading frequency is low, the sampling time interval is lengthened and summation time is increased. On the other hand, when it is desired to make a highly precise estimate of fading frequency when fading frequency is high, the sampling time interval is shortened and summation time is decreased. If a coarse precision is acceptable, summation time is decreased in either case. Further, by averaging the summation values with regard to a plurality of paths, summation time is shortened and the required accuracy can be obtained in less time. By changing over sampling time, summation time and number of paths utilized in accordance with operating conditions, system resources and power consumption can be reduced in comparison with a case where fixed parameters for maximum precision are used.

According to a still further embodiment of the present invention, the fading-frequency estimation apparatus is arranged such that a difference between mutually adjacent sampled power values is defined as a first-order difference, a difference between first-order differences is defined as a second-order difference and high-order differences greater than those of the second order are similarly defined, the high-order differences are calculated, absolute values of these high-order differences are summed over a predetermined period of time and fading frequency is estimated based upon the summation value. The obtained summation value of the absolute values of the high-order differences is different from the summation value of the absolute values of the power differences. Accordingly, if the required accuracy is not obtained with the summation value of the absolute values of the power differences, the summation value of the absolute values of the high-order differences is used instead, whereby a suitable estimation of fading frequency is carried out.

According to another embodiment of the present invention, the fading-frequency estimation apparatus is for obtaining summation values of absolute values of power differences simultaneously with respect to a plurality of combinations of sampling time intervals and the aforementioned summation times, estimating fading frequencies based upon these summation values and selecting the most accurate of the plurality of estimated fading frequencies. If this arrangement is adopted, fading frequency can be estimated more accurately with regard to frequencies over a wide range.

Other features and advantages of the present invention will be apparent from the following description taken in conjunction with the accompanying drawings, in which:
Fig. 1 is a block diagram illustrating the principles of the present invention;
Fig. 2 is a diagram useful in describing the operation of Fig. 1;
Fig. 3 is a diagram useful in describing a power slope vs. fading frequency characteristic;
Fig. 4 is a block diagram showing an example of the structure of a fading-frequency estimating unit;
Fig. 5 is a block diagram showing another example of the structure of a fading-frequency estimating unit;
Fig. 6 is a diagram useful in describing a power slope vs. fading frequency characteristic in a case where a desired fading frequency can be estimated with a certain accuracy σ;
Fig. 7 is a diagram useful in describing another power slope vs. fading frequency characteristic in a case where a desired fading frequency can be estimated with a certain accuracy σ;
Fig. 8 is a block diagram illustrating a CDMA receiving system having an apparatus for estimating fading frequency according to a first embodiment of the present invention;
Fig. 9 is a block diagram illustrating a CDMA receiving system having an apparatus for estimating fading frequency according to a second embodiment of the present invention;
Fig. 10 is a block diagram illustrating a CDMA receiving system having an apparatus for estimating fading frequency according to a third embodiment of the present invention;
Fig. 11 is a block diagram illustrating a CDMA receiving system having an apparatus for estimating fading frequency according to a fourth embodiment of the present invention;
Fig. 12 is a block diagram illustrating a CDMA receiving system having an apparatus for estimating fading frequency according to a fifth embodiment of the present invention;
Fig. 13 is a block diagram illustrating a CDMA receiving system having an apparatus for estimating fading frequency according to a sixth embodiment of the present invention;
Fig. 14 is a diagram useful in describing high-order differences in power;
Fig. 15 is a block diagram illustrating a CDMA receiving system having an apparatus for estimating fading frequency according to a seventh embodiment of the present invention;
Fig. 16 is a diagram useful in describing the effect of fading on receive power according to the prior art; and
Fig. 17 is a block diagram illustrating an apparatus for estimating fading frequency according to the prior art.

### (A) Principles of the present invention

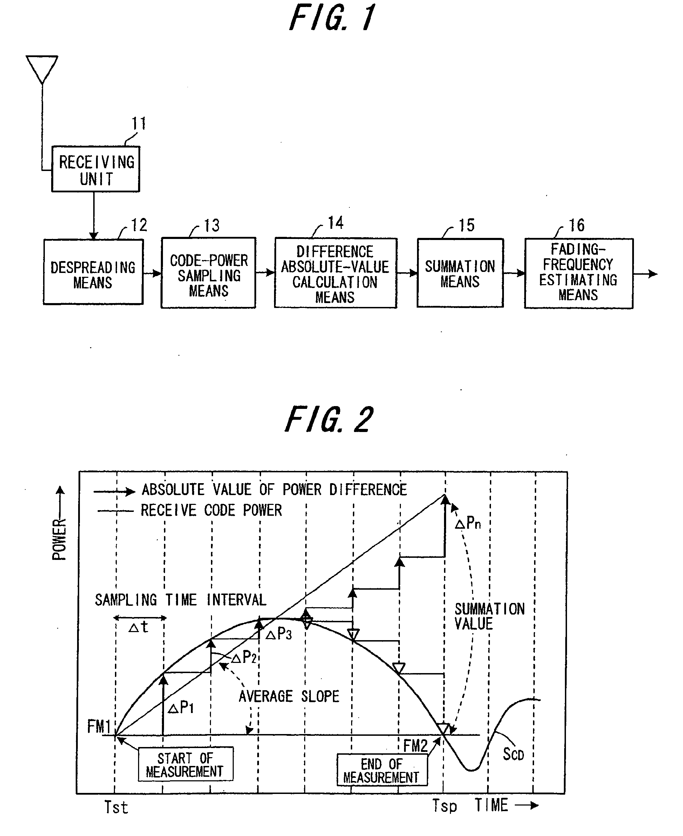

Fig. 1 is a block diagram illustrating the principles of the present invention.

A receiving unit 11 amplifies a signal received at an antenna, frequency-converts the amplified signal to baseband signals and outputs an in-phase component and a quadrature component by orthogonal detection. A despreading unit (code-signal acquisition means) 12 multiplies the output signal of the receiving unit 11 by a spreading code that is identical with a spreading code used on the transmitting side, thereby despreading the signal. As a result, the despreading unit 12 generates a code signal conforming to a prescribed user channel and a code signal conforming to a pilot channel. A code-power sampling unit (power sampling means) 13 samples the power of the code signal on the user channel or of the code signal on the pilot channel at prescribed intervals, and a difference absolute-value calculation unit (calculation means) 14 calculates the absolute values of the differences between mutually adjacent sampled power values. A summation unit (summation means) 15 sums the calculated absolute values of the differences over a prescribed period of time, and a fading-frequency estimating unit (means) 16 estimates fading frequency based upon the value obtained by the summation.

Fig. 2 is a diagram useful in describing the operation of Fig. 1. Reference characters S_{CD} in Fig. 2 represent the power waveform of a received code signal influenced by fading. The shape of a peak produced owing to the influence of fading has approximate left-right symmetry. The peak has rising and falling sides the bases whereof are FM1 and FM2, respectively. Let base FM1 be measurement starting time Tst, and let base FM2 be measurement end time Tsp. The length of time from the measurement start point Tst to the measurement end time Tsp is adopted as summation time. The code-power sampling unit 13 samples code signal power at a prescribed sampling interval Δt over the period of time from the measurement start point Tst to the measurement end time Tsp and inputs the sampled values to the difference absolute-value calculation unit 14. The latter calculates the absolute value ΔPi of the difference between mutually adjacent sampled power values, and the summation unit 15 sums the calculated absolute values of respective ones of the differences. As a result, the summation value rises in steps as indicated by the solid line in Fig. 2. If summation is performed over a sufficiently long period of time, a value obtained by dividing the summation value by the summation time may be considered to be the average slope of the summation value. In Fig. 2, a straight line AVL represents the average slope of the summation value. The average slope of the summation value indicates the average value (power slope) of the differences in power values.

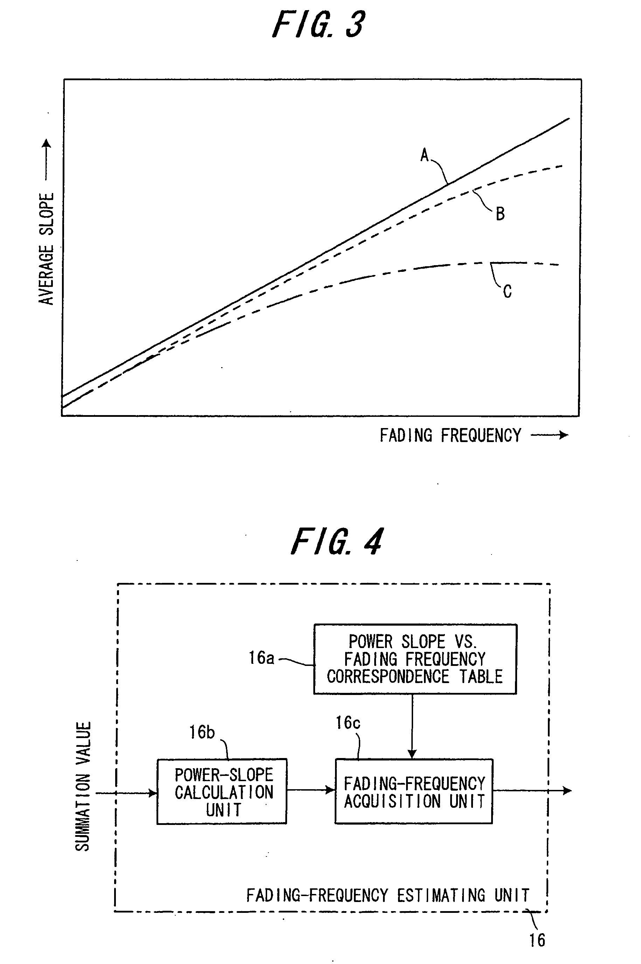

Power slope and fading frequency are related as shown in Fig. 3. Accordingly, if this relationship is provided beforehand in the form of a table, then a fading frequency that corresponds to a power slope found from a summation value can be estimated from the table. Alternatively, depending upon the sampling time interval, an approximation can be made by an interpolated curve. This means that fading frequency can be estimated by calculating it directly using a formula (a calculation formula). Accordingly, the fading-frequency estimating unit 16 calculates the average slope of the summation value and estimates fading frequency based upon the table or calculation formula. In Fig. 3, curves A, B and C are characteristics in which the sampling interval Δt serves as the parameter. The larger the sampling interval Δt, the more the characteristic curve departs from a straight line. Accordingly, the fading-frequency estimating unit 16 estimates the fading frequency using the characteristic that conforms to the actual sampling interval Δt.

Fig. 4 is a block diagram illustrating an example of the structure of the fading-frequency estimating unit. A power slope vs. fading frequency correspondence table 16a holds a large number of the characteristics A, B, C ... shown in Fig. 3 with the sampling interval serving as the parameter. A power-slope calculation unit 16b calculates the power slope per prescribed time from the summation value, and a fading-frequency acquisition unit 16c acquires the fading frequency that conforms to the above-mentioned power slope from the power slope vs. fading frequency correspondence table 16a and outputs this fading frequency.

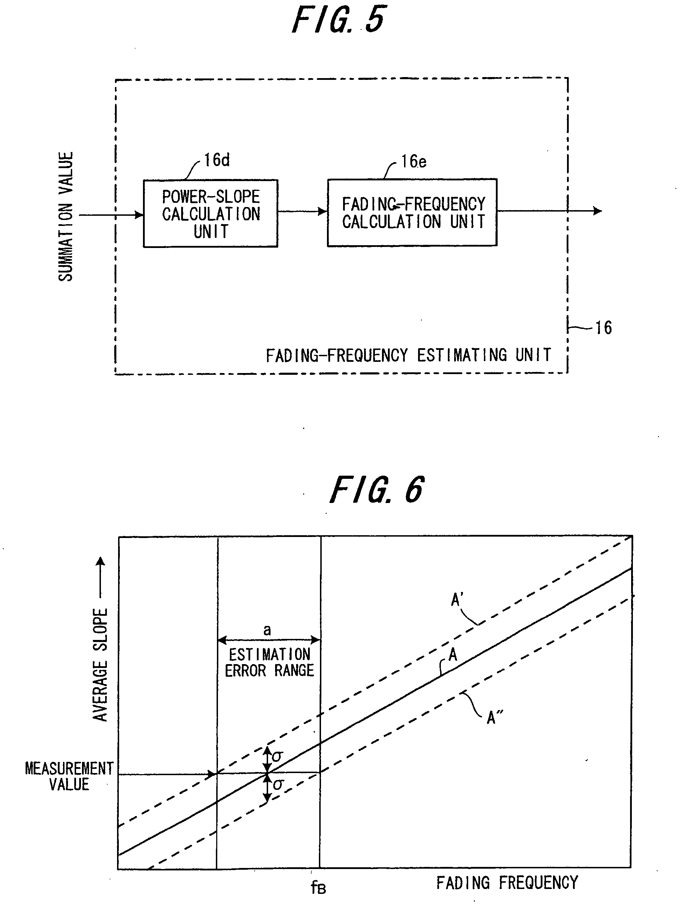

Fig. 5 shows another example of the structure of the fading-frequency estimating unit. Here a power-slope calculation unit 16d calculates the power slope per prescribed time from the summation value and a fading-frequency calculation unit 16e calculates the fading frequency that conforms to the above-mentioned power slope using a predetermined calculation formula. For example, the characteristic curves shown in Fig. 3 are obtained by linear approximation.

### (B) Properties of summation value

The properties of the summation value will now be described. The power of a received code signal on a prescribed channel gives rise to a variation in fading with time along the reception propagation path, and the period of this variation changes in dependence upon the velocity, etc., of the mobile station. There is a correlation between the frequency of fading variation and the average slope of the fluctuation in power. Though the characteristics curves A, B and C (see Fig. 3) that indicate the relationship between power slope and fading frequency vary depending upon the sampling time interval Δt at which power slope is found, they are approximately monotonically increasing functions.

Consider characteristic curve A. Fading frequency contains an error with respect to characteristic curve A. Consequently, the fading frequency found from comparison with table values or by a calculation formula also possesses an error. Fig. 6 illustrates characteristic curves A', A" whereby a desired fading frequency can be estimated uniquely with an accuracy of ±σ (a probability of approximately 85%). Here reference character a represents the range of estimation error. More specifically, the characteristic curves A', A" are straight lines that indicate the error range a, which is decided by the accuracy ±σ (a probability of approximately 85%). The characteristic curve A indicates a case where fading frequency can be approximated satisfactorily. Even if fading frequency is found by a linear formula, it can be estimated with the accuracy shown in Fig. 6. In a case where the characteristic curve A is linear, the range a of estimation error is fixed and is not dependent upon fading frequency. Accordingly, this curve can be used to estimate fading frequency over the full range of frequencies.

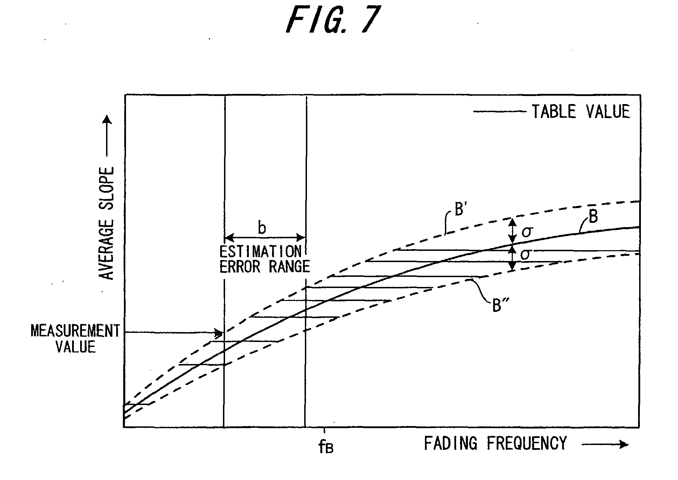

Fig. 7 shows an example of the characteristic curve B, the entirety of which cannot be approximated by a straight line. The characteristic curve B can be represented piecewise by several straight lines. Fading frequency contains an error with respect to the characteristic curve B. Consequently, the fading frequency found from comparison with table values or by a calculation formula also possesses an error. Fig. 7 illustrates characteristic curves B', B" whereby a desired fading frequency can be estimated uniquely with an accuracy of ±σ(a probability of approximately 85%). More specifically, the characteristic curves B', B" are curves that indicate an estimation error range b, which is decided by the accuracy ± σ (a probability of approximately 85%). Though the estimation error range of characteristic curve B is narrow at low frequencies, estimation error takes on a large value when frequency is high. This means that the characteristic curve of Fig. 7 has a high reliability at low frequencies and a low reliability at high frequencies. Accordingly, though this characteristic curve cannot be used to estimate fading frequency at high frequencies, it is possible to judge whether fading frequency is high or low.

### (C) First embodiment

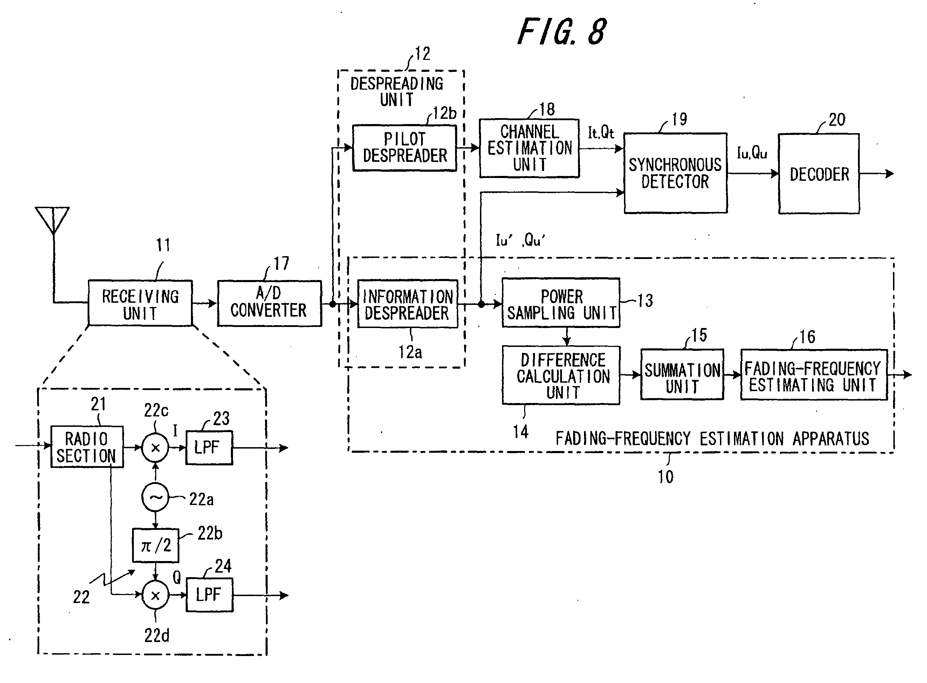

Fig. 8 is a block diagram illustrating a CDMA receiving system having an apparatus for estimating fading frequency according to a first embodiment of the present invention.

As shown in Fig. 8, the receiving unit 11 includes a radio section 21, an orthogonal detector 22 and lowpass filters 23, 24. The radio section 21 amplifies a high-frequency signal received at an antenna and frequency-converts the amplified signal to baseband signals. The orthogonal detector 22 subjects the baseband signals to orthogonal detection and outputs an in-phase component (I-component) signal and a quadrature component (Q-component) signal. The lowpass filters 23, 24 limit the bands of the output signals. The orthogonal detector 22 includes a receive carrier generator 22a, a π/2 phase shifter 22b, and multipliers 22c, 22d that multiply the baseband signals by the receive carriers, thereby outputting the I-component and Q-component signals.

An A/D converter 17 converts the I- and Q-component signals, which are output from the receiving unit 11, to digital signals and inputs these digital signals to the despreading unit 12. The latter has an information despreader 12a for multiplying (despreading) the I, Q components (I-, Q signal components) of the receive signal by a spreading code that conforms to the user channel, thereby outputting I, Q components (Iu', Qu') of the information signal of the user channel. In other words, the information despreader 12a extracts the I, Q components (Iu', Qu') of the information signal solely of the prescribed user channel from the receive signal of signals spread by a number of orthogonal codes and multiplexed.

The despreading unit 12 also includes a pilot despreader 12b for multiplying (despreading) the I, Q components (I-, Q- signal components) of the receive signal by a code that conforms to a pilot channel CPICH, thereby outputting I, Q components of the pilot signal. A channel estimation unit 18 averages the voltages of the I, Q components of the pilot signal over a predetermined number of slots and outputs channel estimation signals It, Qt. A synchronous detector 19 obtains, from the channel estimation signals It, Qt, a phase difference θ between the pilot signal, which is contained in the receive signal, and an already known pilot signal (the channel estimation signals It, Qt are cosine and sine components of the phase difference θ), and restores the phase of the despread information signals Iu', Qu' to that of the signals Iu, Qu of the original phase based upon the phase difference θ. A decoder 20 decodes the transmitted data based upon the signal Iu, Qu and outputs the result. The foregoing is the usual receiving operation of a CDMA receiver.

A fading-frequency estimation apparatus 10 includes the power sampling unit 13 for calculating, at prescribed intervals, the sum of the squares (i.e., Iu'² + Qu'²) of the complex components Iu', Qu' of the information signal that is output from the information despreader 12a, and for holding the result of calculation as the value of power; the difference absolute-value calculation unit 14 for calculating the absolute values of the differences between mutually adjacent sampled power values; the summation unit 15 for summing the calculated absolute values of the differences over a prescribed period of time; and the fading-frequency estimating unit 16 for calculating the power slope per prescribed time from the summation value and estimating fading frequency based upon the power slope.

In accordance with the first embodiment, a receive signal is despread using an already known code, thereby eliminating other multiplexed code components. By simultaneously summing the difference power values, noise components are reduced. This makes it possible to extract only the code component of a prescribed channel in highly precise fashion. As a result, power sampled from the code signal component indicates fluctuation ascribable to fading and the accuracy with which the fading frequency is estimated can be improved over the conventional method.

### (D) Second embodiment

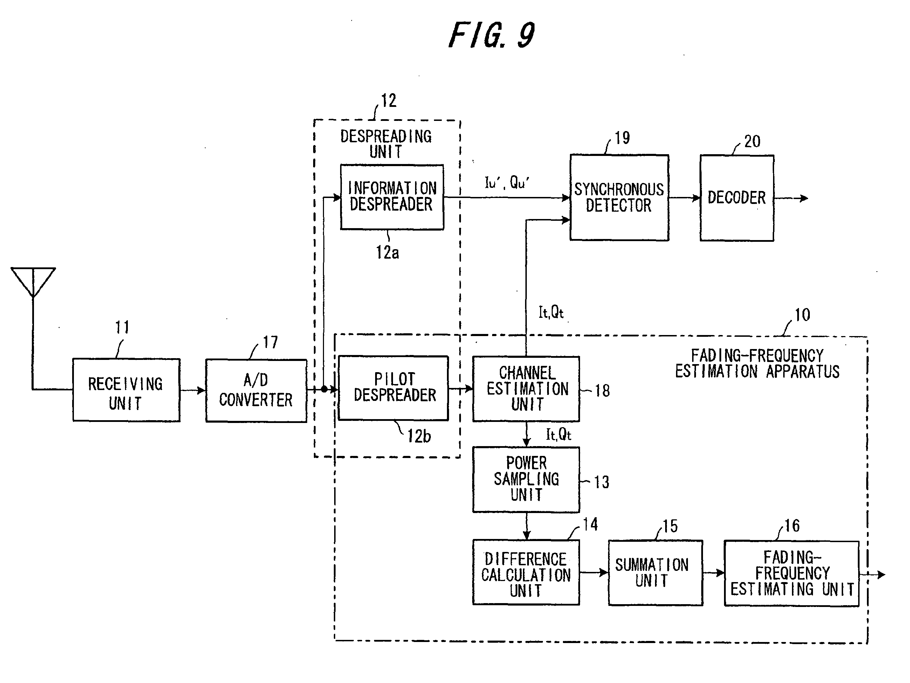

Fig. 9 is a block diagram illustrating a CDMA receiving system having an apparatus for estimating fading frequency according to a second embodiment of the present invention. The ordinary receiving operation performed by the CDMA receiver is similar to that of the first embodiment. When fading frequency is estimated, however, power sampling of the code signal on the user channel is not performed as in the first embodiment. Here a channel estimation value is calculated from the code signal of the pilot channel and the power of the code signal is sampled from the channel estimation value.

More specifically, the fading-frequency estimation apparatus 10 includes the power sampling unit 13 for calculating, at prescribed intervals, the sum of the squares (i.e., It² + Qt²) of the complex components It, Qt of the channel estimation signal that is output from the channel estimation unit 18, and for holding the result of calculation as the value of power; the difference absolute-value calculation unit 14 for calculating the absolute values of the differences between mutually adjacent sampled power values; the summation unit 15 for summing the calculated absolute values of the differences over a prescribed period of time; and the fading-frequency estimating unit 16 for calculating the power slope per prescribed time from the summation value and estimating fading frequency based upon the power slope.

In other words, with the first embodiment, power is found by averaging, at the sampling time intervals, symbols contained in these intervals. When the time interval becomes short, however, noise components cannot be eliminated satisfactorily and measurement error increases. Accordingly, code signal power is obtained using the channel estimation value. Since the channel estimation value is used in synchronous detection, results from which noise components have been eliminated satisfactorily on a per-symbol basis are obtained. By using the received code symbols, therefore, a summation value of absolute values of the power differences can be obtained with greater accuracy.

In accordance with the second embodiment, power is sampled using the channel estimation value. As a result, a temporal variation in fading can be extracted with greater accuracy and fading frequency can be estimated more accurately. Further, there is an advantage in terms of mounting cost (implementation costs). Specifically, the channel estimation value is essential for demodulating the received code and therefore components need not be newly provided with regard to estimation of fading frequency.

### (E) Third embodiment

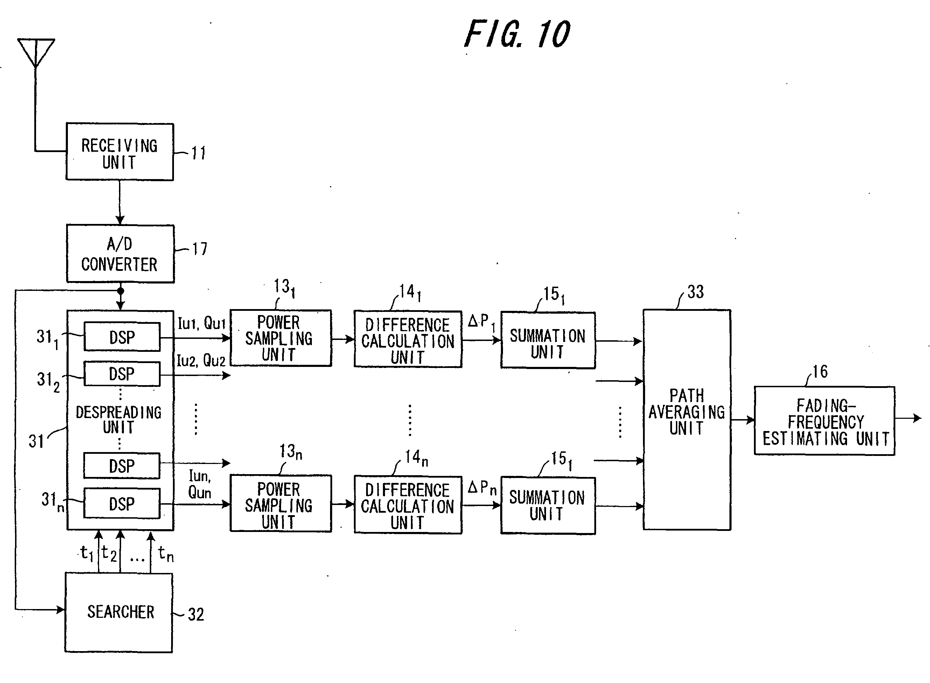

Fig. 10 is a block diagram illustrating a CDMA receiving system having an apparatus for estimating fading frequency according to a third embodiment of the present invention. With the first and second embodiments, the summation value of power differences is obtained using only a single path of multiple paths. In a CDMA system, however, code signals of the same user channels or pilot channels can be extracted by despreading with regard to each of the paths of multiple paths. Since fading fluctuation on each path exhibits no correlation, a summation value is obtained for each path and the average taken to better eliminate noise and make it possible to obtain a summation value having a higher degree of accuracy.

In Fig. 10, the receiving unit 11 amplifies the high-frequency signal received at the antenna, frequency-converts the amplified signal to baseband signals and outputs the in-phase component (I-component) signal and the quadrature component (Q-component) signal by applying orthogonal detection. The A/D converter 17 converts the I- and Q-component signals, which are output from the receiving unit 11, to digital signals and inputs these digital signals to a despreading unit 31 and searcher 32.

When a spread signal influenced by multipath is input directly to the searcher 32, the latter performs an autocorrelation operation using a matched filter to detect multipath, decides despread timings t₁ to tₙ of the respective paths and inputs these timings to the despreading unit 31.

The despreading unit 31 is provided with despreaders (DSP) 31₁ to 31ₙ conforming to respective ones of the paths of the multiple paths. The despreaders 31₁ to 31ₙ are information despreaders each for multiplying (despreading) the I, Q components of the receive signal by the spreading code of the user channel at a timing specified by the searcher 32, thereby outputting I, Q components (Iuj, Quj) (j = 1 to n) of the information signal of the user channel. These I, Q components (Iuj, Quj) (j = 1 to n) are used in the decoding of information but they are also used in estimating fading frequency.

Power sampling units 13ⱼ (j = 1 to n) conforming to respective ones of the paths of multiple paths each calculate, at prescribed intervals, the sum of the squares (i.e., Iuj² + Quj²) of the complex components Iuj, Quj of the information signal that is output from the information despreader 31ⱼ, and hold the result of calculation as the value of power. Difference absolute-value calculation units 14ⱼ (j = 1 to n) each calculate the absolute value ΔPj of the difference between mutually adjacent power values sampled by the respective power sampling unit 13ⱼ. Summation units 15ⱼ (j = 1 to n) each sum the calculated absolute values ΔPⱼ of the differences over a prescribed period of time. A path averaging unit 33 totals the summation values from the summation units 15₁ to 15ₙ at each summation time and averages the summation values by dividing the total value by the number of paths. The fading-frequency estimating unit 16 calculates the power slope per prescribed time from the averaged summation value and estimates fading frequency based upon the power slope.

In accordance with the third embodiment, fading frequency can be estimated with greater accuracy. The reason for this is as follows: The code signal of a prescribed path obtained from each path of multiple paths by despreading exhibits fading that behaves independently. The average value of summation values found with regard to respective ones of these paths therefore serves as a summation value measured with higher accuracy. If fading frequency is estimated based upon this path average of the summation values, then estimation accuracy can be improved.

In the foregoing, the despreaders 31₁ to 31ₙ are described as being information despreaders. However, they can be made pilot despreaders. In such case each power sampling unit would sample power from the channel estimation value.

Further, in the third embodiment, the components for demodulating the receive signal are not shown. However, a finger is provided for each path, the output signals of the fingers are RAKE combined and the receive data is demodulated from the combined signal. Though demodulation components are not shown in the embodiments that follow, these embodiments have a modulation system similar to that of the first embodiment or the modulation system of the above-described multipath arrangement.

### (4) Fourth embodiment

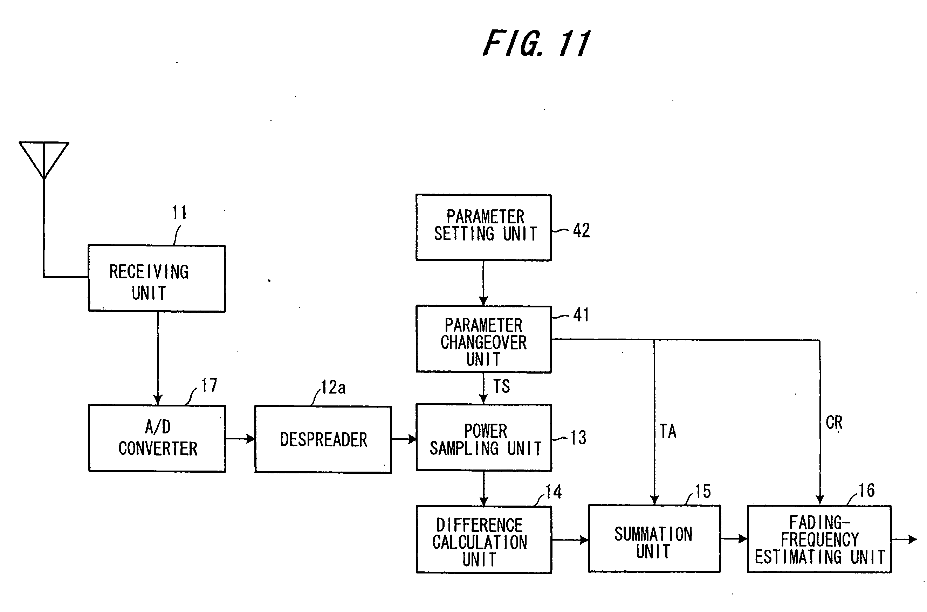

Fig. 11 is a block diagram illustrating a CDMA receiving system having an apparatus for estimating fading frequency according to a fourth embodiment of the present invention. According to the first and second embodiments, power is sampled at prescribed time intervals and absolute values of power differences are summed at prescribed times. In the first and second embodiments, it is necessary to adopt an arrangement in which fading frequency can be estimated with the highest accuracy in order to arrange it so that all cases in which estimated fading frequency is utilized can be supported. To achieve this, the system must be operated in such a manner that parameters (the power sampling interval and summation time, etc.) are fixed at values that make it possible to estimate fading frequency with the highest accuracy. If the system is thus operated upon fixing the parameters, in some cases accuracy will be raised more than necessary with a commensurate expenditure of system resources. Accordingly, in the fourth embodiment, parameters are optimized beforehand in accordance with the conditions of fading frequency utilization and the parameters are reported to each processing block to thereby control processing. As a result, system resources are conserved and power consumption can be reduced.

In Fig. 11, the operator sets optimum parameters, which conform to the conditions of fading frequency utilization, in a parameter changeover unit 41 from a parameter setting unit 42. In accordance with a command from the parameter setting unit 42, the parameter changeover unit 41 sets a power sampling interval TS, summation time TA and fading-frequency estimation characteristic CR in the power sampling unit 13, summation unit 15 and fading-frequency estimating unit 16, respectively. As a result, the power sampling unit 13 samples the power of the code signal of the user channel, which is output from the despreader 12a, at the sampling interval TS. Further, the summation unit 15 sums the absolute values of the power differences, which are output from the difference absolute-value calculation unit 14, over the summation time TA, and the fading-frequency estimating unit 16 estimates fading frequency using the power slope vs. fading frequency characteristic (see Fig. 3) that has been set.

In the foregoing, the parameter setting unit 42 sets each of the parameter values in the parameter changeover unit 41 directly in accordance with a command from the operator. However, it is also possible to adopt an arrangement in which the required estimation accuracy for estimating fading frequency is entered and the parameter changeover unit 41 decides the parameters, which conform to the entered estimation accuracy of fading frequency, automatically and inputs these parameters to the respective units.

Further, the despreader 12a is described as being an information despreader. However, this can be made a pilot despreader. In such case the power sampling unit 13 would sample power from the channel estimation value.

### (G) Fifth embodiment

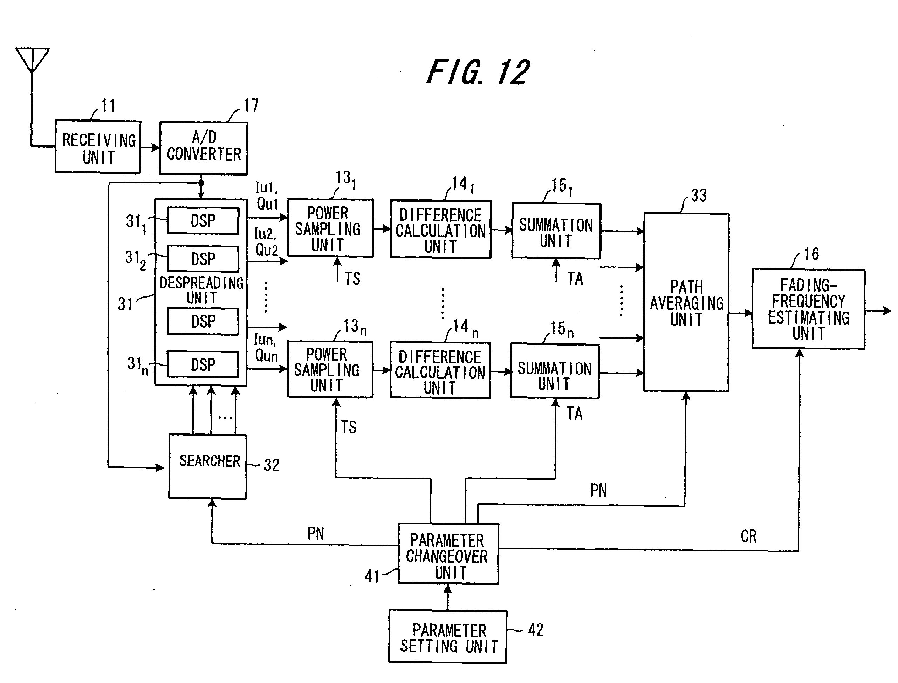

Fig. 12 is a block diagram illustrating a CDMA receiving system having an apparatus for estimating fading frequency according to a fifth embodiment of the present invention. According to the third embodiment, power is sampled at prescribed time intervals in regard to all paths of multiple paths that can be utilized, and the absolute values of the power differences are summed over a prescribed period of time. In the third embodiment, it is necessary to adopt an arrangement in which fading frequency can be estimated with the highest accuracy in order to arrange it so that all cases in which estimated fading frequency is utilized can be supported. To achieve this, the system must be operated in such a manner that parameters (the power sampling interval and summation time, etc.) are fixed at values that make it possible to estimate fading frequency with the highest accuracy. If the system is thus operated upon fixing the parameters, in some cases accuracy will be raised more than necessary with a commensurate expenditure of system resources. Accordingly, in the fifth embodiment, parameters are optimized beforehand in accordance with the conditions of fading frequency utilization and the parameters are reported to each processing block to thereby control processing. As a result, system resources are conserved and power consumption can be reduced.

In Fig. 12, the operator sets optimum parameters, which conform to the conditions of fading frequency utilization, in the parameter changeover unit 41 from the parameter setting unit 42. In accordance with a command from the parameter setting unit 42, the parameter changeover unit 41 sets the power sampling interval TS, summation time TA, fading-frequency estimation characteristic CR and number PN of used paths in the power sampling units 13₁ to 13ₙ, summation units 15₁ to 15ₙ, fading-frequency estimating unit 16 and searcher 32, respectively.

The searcher 32 decides PN-number of paths from among the multiple paths in order of decreasing reception field strength, inputs despread timing signals to the despreaders corresponding to these paths, causes these despreaders to perform despreading and does not cause the other despreaders to perform despreading. Power sampling units corresponding to the aforesaid PN-number of paths each sample power of the code signal on the user channel output from the set despreading unit at the sampling interval TS. Similarly, summation units corresponding to the PN-number of paths each sum the absolute values of power differences, which are output from the corresponding difference calculation unit, over the set summation time TA. The path averaging unit 33 totals the summation values from the summation units at each summation time and averages the summation values by dividing the total value by the number of paths PN. The fading-frequency estimating unit 16 calculates the power slope per prescribed time from the averaged summation value and estimates fading frequency based upon the power slope.

In the foregoing, the despreaders 31₁ to 31ₙ are described as being information despreaders. However, they can be made pilot despreaders. In such case each power sampling unit would sample power from the channel estimation value.

### (H) Sixth embodiment

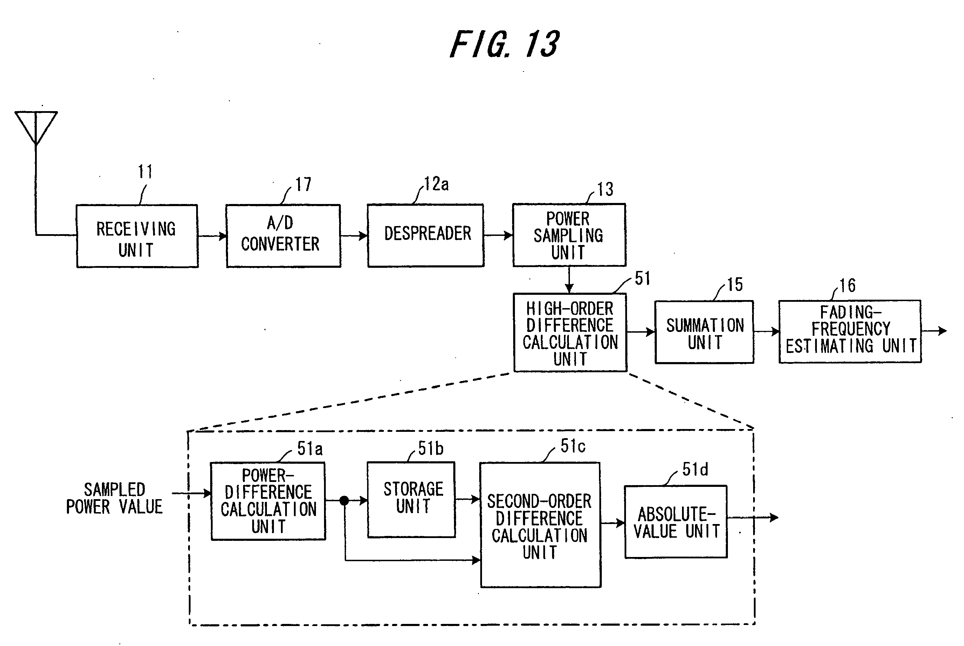

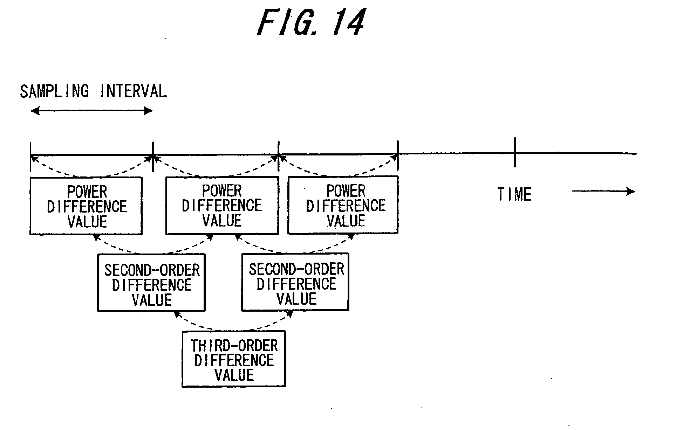

Fig. 13 is a block diagram illustrating a CDMA receiving system having an apparatus for estimating fading frequency according to a sixth embodiment of the present invention. According to the sixth embodiment, the absolute values of high-order differences in power are obtained rather than simple differences in power, the absolute values of these high-order differences are summed, the summation value is divided by summation time and fading frequency is estimated based upon the average value of the high-order differences obtained. The definition of a high-order difference in power will be described with regard to Fig. 14. Specifically, a difference (power difference) between mutually adjacent sampled power values is defined as a first-order difference and a difference between first-order differences is defined as a second-order difference. High-order differences from the second-order difference onward are similarly defined.

The average of high-order difference values of received-code signal power exhibits a correlation with respect to fading frequency, meaning that fading frequency can be estimated. A high-order difference value average vs. fading frequency characteristic has a form different from that of the power slope vs. fading frequency characteristic and may in some cases provide better accuracy with the same parameters.

In Fig. 13, the receiving unit 11 amplifies the high-frequency signal received at the antenna, frequency-converts the amplified signal to baseband signals and outputs the in-phase component (I-component) signal and the quadrature component (Q-component) signal by applying orthogonal detection. The A/D converter 17 converts the I- and Q-component signals, which are output from the receiving unit 11, to digital signals and inputs these digital signals to the despreader 12a. The power sampling unit 13 samples the power of the code signal on the user channel, which is output from the despreader 12a, at the set sampling interval. A high-order difference calculation unit 51 calculates and outputs the absolute value of, e.g., the second-order difference in code signal power. That is, the high-order difference calculation unit 51 has a power-difference calculation unit 51a for calculating the difference between mutually adjacent sampled power values and saving the calculated value in a storage unit 51b; a second-order difference calculation unit 51c for calculating the difference (second-order difference value) between the power difference value at the present sampling time and the power difference value at the immediately preceding sampling time; and an absolute-value unit 51d for calculating and outputting the absolute value of the second-order difference value. The summation unit 15 sums the absolute values of the high-order differences, which are output from the high-order difference calculation unit 51, over the set summation value, and the fading-frequency estimating unit 16 estimates fading frequency using the set high-order difference value average vs. fading frequency characteristic.

In the foregoing, the despreader 12a is described as being an information despreader. However, this can be made a pilot despreader. In such case the power sampling unit 13 would sample power from the channel estimation value.

### (I) Seventh embodiment

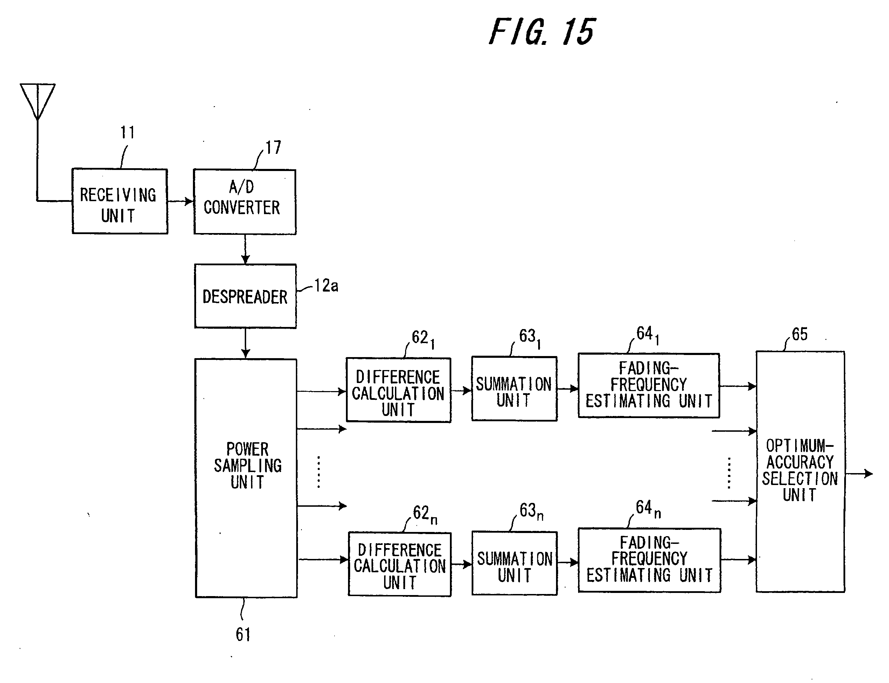

Fig. 15 is a block diagram illustrating a CDMA receiving system having an apparatus for estimating fading frequency according to a seventh embodiment of the present invention. As shown in Fig. 3, the power slope vs. fading frequency characteristic differs depending upon the combination of parameters (power sampling interval and power-difference summation time). Further, as shown in Figs. 6 and 7, accuracy with regard to fading frequency changes when a parameter differs. Accordingly, in the seventh embodiment, calculation for obtaining a summation value of power difference values is performed with regard to a plurality of combinations of different parameters, the most accurate value is selected from among the values obtained and this is adopted as the final result (estimated fading frequency). For example, with reference to Figs. 6 and 7, accuracy is excellent if fading frequency is found by the characteristic of Fig. 7 (the power sampling interval is long) for frequencies below the fading frequency f_{B}. On the other hand, accuracy is excellent if fading frequency is found by the characteristic of Fig. 6 (the power sampling interval is short) for frequencies above the fading frequency f_{B}. In other words, depending upon the parameter, there are cases where accuracy is excellent at low frequencies and poor at high frequencies. There may also be cases where the converse is true. Accordingly, by measuring these simultaneously, accuracy can be optimized over a wide range of frequencies.

In Fig. 15, the receiving unit 11 amplifies the high-frequency signal received at the antenna, frequency-converts the amplified signal to baseband signals and outputs the in-phase component (I-component) signal and the quadrature component (Q-component) signal by applying orthogonal detection. The A/D converter 17 converts the I- and Q-component signals, which are output from the receiving unit 11, to digital signals and inputs these digital signals to the despreader 12a. The power sampling unit 13 samples the power of the code signal on the user channel, which is output from the despreader 12a, at the shortest sampling interval.

Difference calculation units 62ⱼ (j = 1 to n) each calculate the difference in mutually adjacent sampled power values at the respective set sampling interval and output the absolute value. Summation units 63ⱼ (j = 1 to n) each sum the calculated absolute values of the power differences, which are output from the difference calculation units 62ⱼ (j = 1 to n), over the respective set summation time. Fading-frequency estimation units 64ⱼ (j = 1 to n) each estimate fading frequency using a slope vs. fading frequency characteristic that corresponds to the combination of set power sampling time and summation time. An optimum-accuracy selection unit 65 obtains the estimation error (see Figs. 6 and 7) of each estimated fading frequency and outputs the fading frequency for which the estimation error is smallest.

The despreader 12a is described as being an information despreader. However, this can be made a pilot despreader. In such case the power sampling unit 13 would sample power from the channel estimation value.

Thus, in accordance with the present invention, a desired code signal component is extracted by eliminating other multiplexed code components by despreading. By simultaneously summing the difference power values, noise components are reduced. This makes it possible to extract the desired code component in highly accurate fashion. Power sampled from this code signal, therefore, substantially indicates fluctuation ascribable to fading, and highly accurate estimation of fading frequency can be performed.

Further, in embodiments of the present invention, power is sampled from a channel estimation value and therefore a temporal change in fading can be extracted in highly accurate fashion. As a result, fading frequency can be estimated more accurately. There is also an advantage in terms of hardware cost. Specifically, the channel estimation value is essential for demodulating a received code. This means that components need not be mounted anew with regard to estimation of fading frequency.

Further, in embodiments of the present invention, it is so arranged that a summation value of absolute values of power differences is obtained with regard to each path of multiple paths, the average value of these summation values of every path is calculated and fading frequency is estimated based upon the average value. As a result, the accuracy of the summation values is improved and this makes it possible to estimate fading frequency more accurately.

Further, in embodiments of the present invention, when a difference between mutually adjacent receive-signal power values is defined as a first-order difference, a difference between first-order differences is defined as a second-order difference and high-order differences greater than those of the second order are similarly defined, the high-order differences are calculated, absolute values of these high-order differences are summed over a predetermined period of time and fading frequency is estimated based upon the summation value. As a result, the summation value of the absolute values of the high-order differences provides a characteristic that is different from that of the summation value of absolute values of the power differences. Accordingly, even if the required accuracy is not obtained with the summation value of the absolute values of the power differences, fading frequency can be estimated appropriately by using the summation value of the absolute values of the high-order differences instead.

Further, in accordance with the apparatus for estimating fading frequency according to embodiments of the present invention, summation values of absolute values of power differences are obtained simultaneously with respect to a plurality of combinations of sampling time intervals and summation times, fading frequency is estimated based upon these summation values and the most accurate of the plurality of estimated fading frequencies is selected. As a result, fading frequency can be estimated more accurately with regard to a wide range of frequencies.

Two or more of the various embodiments of the invention described above may be combined, where appropriate, to provide an apparatus for estimating fading frequency.

As many apparently widely different embodiments of the present invention can be made without departing from the scope thereof, it is to be understood that the invention is not limited to the specific embodiments thereof except as defined in the appended claims.

## Claims

1. An apparatus for estimating fading frequency in a CDMA mobile communications system, wherein said apparatus comprises:
code-signal acquisition means (12; 31) for acquiring a prescribed code signal from a receive signal by despreading; said apparatus **characterised by** further comprising
power sampling means (13, 61) for sampling code signal power from the code signal at prescribed time intervals;
calculation means (14) for calculating absolute values of differences between mutually adjacent sampled power values;
summation means (15) for summing the calculated absolute values of the differences over a prescribed period of time; and
fading-frequency estimation means (16) for estimating fading frequency based upon a summation value from said summation means; wherein said fading-frequency estimation means (16) includes:
a correspondence table (16a) for storing a corresponding relationship between power slope and fading frequency; and
a fading-frequency calculation unit (16b, 16c) for calculating, as a power slope, an average value of power differences per prescribed time from the summation value, and acquiring a fading frequency that corresponds to the average value from said correspondence table.

2. The apparatus according to claim 1, wherein said code-signal acquisition means (12) includes:
means (12b) for acquiring a code signal of a pilot channel from the receive signal by despreading; and
means (18) for acquiring a channel estimation value from the code signal; wherein
said power sampling means (13, 61) is arranged to sample power of the code signal from the channel estimation value at prescribed time intervals.

3. The apparatus according to any preceding claim, wherein said apparatus further comprises means (41, 42) for varying the time interval at which the code signal power is sampled and the summation time of the absolute values of the differences.

4. The apparatus according to any preceding claim, wherein said apparatus further comprises:
means (62₁, 63₁; 62ₙ, 63ₘ) for obtaining summation values of power-difference absolute values with regard to a plurality of combinations of the sampling time intervals and summation times;
means (64₁, 64ₙ) for estimating fading frequencies based upon respective ones of the summation values; and
means (65) for selecting whichever of the plurality of estimated fading frequencies has the highest accuracy.

5. The apparatus according to claim 1, wherein the apparatus comprises, for each path of multiple paths:
a said code-signal acquisition means (31₁...31ₙ);
a said power sampling means (13₁...13ₙ);
a said calculation means (14₁...14ₙ); and
a said summation means (15₁...15ₙ);
and wherein said apparatus further comprises:
means (33) for calculating an average of the summation values obtained for each of the paths;
and wherein said fading-frequency estimation means (16) is arranged to estimate the fading frequency based upon the average of the summation values; and wherein said apparatus further comprises
means (32) for varying the number of paths of the multiple paths.

6. The apparatus according to claim 1, wherein
the calculation means (51) is arranged to calculate higher-order differences and to calculate absolute values of the higher-order differences, where a difference between mutually adjacent sampled power values is defined as a first-order difference, a difference between the first-order differences is defined as a second-order difference and higher-order differences from the second-order difference onward are similarly defined; and
the summation means (15) is arranged to sum the calculated absolute values of the higher-order differences over the prescribed period of time.

7. A method for estimating fading frequency in a communication system, comprising a step of:
despreading a prescribed code signal from a receive signal; the method **characterised by** comprising further steps of
sampling code signal power for the code signal at prescribed time intervals;
calculating absolute values of differences between mutually adjacent sampled power values;
summing the calculated absolute values over a prescribed period of time to obtain a summation value; and
estimating a fading frequency using the obtained summation value; wherein the step of estimating the fading frequency includes
calculating, as a power slope, an average value of power differences per prescribed time from the summation value, and acquiring a fading frequency that corresponds to the average value from a correspondence table (16a) that stores a corresponding relationship between power slope and fading frequency.

## Patentansprüche

1. Vorrichtung zum Schätzen der Schwundfrequenz in einem CDMA-Mobilkommunikationssystem, welche vorrichtung umfasst:
ein Codesignalerfassungsmittel (12; 31) zum Erfassen eines vorgeschriebenen Codesignals von einem Empfangssignal durch Entspreizen; wobei die Vorrichtung **dadurch gekennzeichnet ist, dass** sie ferner umfasst:
ein Energieabtastmittel (13, 61) zum Abtasten der Codesignalenergie von dem Codesignal in vorgeschriebenen Zeitintervallen;
ein Berechnungsmittel (14) zum Berechnen von Absolutwerten von Differenzen zwischen miteinander benachbarten abgetasteten Energiewerten;
ein Summiermittel (15) zum Summieren der berechneten Absolutwerte der Differenzen über eine vorgeschriebene Zeitperiode hinweg; und
ein Schwundfrequenzschätzmittel (16) zum Schätzen der Schwundfrequcnz auf der Basis eines Summenwertes von dem Summiermittel; welches Schwundfrequenzschätzmittel (16) enthält:
eine Entsprechungstabelle (16a) zum Speichern einer entsprechenden Beziehung zwischen dem Energiegefälle und der Schwundfrequenz; und
eine Schwundfrequenzberechnungseinheit (16b, 16c) zum Berechnen, als Energiegefälle, eines Durchschnittswertes von Energiedifferenzen pro vorgeschriebener Zeit von dem Summenwert und Erfassen einer Schwundfrequenz, die dem Durchschnittswert entspricht, von der Entsprechungstabelle.

2. Vorrichtung nach Anspruch 1, bei der das Codesignalerfassungsmittel (12) enthält:
ein Mittel (12b) zum Erfassen eines Codesignals eines Pilotkanals von dem Empfangssignal durch Entspreizen; und
ein Mittel (18) zum Erfassen eines Kanalschätzwertes von dem Codesignal; bei der
das Energieabtastmittel (13, 61) angeordnet ist, um die Energie des Codesignals von dem Kanalschätzwert in vorgeschriebenen Zeitintervallen abzutasten.

3. Vorrichtung nach einem vorhergehenden Anspruch, welche Vorrichtung ferner ein Mittel (41, 42) zum Variieren des Zeitintervalls, in dem die Codesignalenergie abgetastet wird, und der Summierzeit der Absolutwerte der Differenzen umfasst.

4. Vorrichtung nach einem vorhergehenden Anspruch, welche Vorrichtung ferner umfasst:
ein Mittel (62₁, 63₁; 62ₙ, 63ₘ) zum Erhalten von Summenwerten von Energiedifferenzabsolutwerten hinsichtlich einer Vielzahl von Kombinationen der Abtastzeitintervalle und Summierzeiten;
ein Mittel (64₁, 64ₙ) zum Schätzen von Schwundfrequenzen auf der Basis von jeweiligen der Summenwerte; und
ein Mittel (65) zum Selektieren, welche von der Vielzahl von geschätzten Schwundfrequenzen die höchste Genauigkeit hat.

5. Vorrichtung nach Anspruch 1, welche Vorrichtung für jeden Weg von multiplen Wegen umfasst:
ein genanntes Codesignalerfassungsmittel (31₁...31ₙ);
ein genanntes Energieabtastmittel (13₁...13ₙ);
ein genanntes Berechnungsmittel (14₁...14ₙ); und
ein genanntes Summiermittel (15₁...15ₙ);
und welche Vorrichtung ferner umfasst:
ein Mittel (33) zum Berechnen eines Durchschnitts der für jeden der Wege erhaltenen Summenwerte;
und bei der das Schwundfrequenzschätzmittel (16) angeordnet ist, um die Schwundfrequenz auf der Basis des Durchschnitts der Summenwerte zu schätzen; und welche Vorrichtung ferner umfasst:
ein Mittel (32) zum Variieren der Anzahl von Wegen der multiplen Wege.

6. Vorrichtung nach Anspruch 1, bei der
das Berechnungsmittel (51) angeordnet ist, um Differenzen höherer Ordnung zu berechnen und Absolutwerte der Differenzen höherer Ordnung zu berechnen, wobei eine Differenz zwischen miteinander benachbarten abgetasteten Energiewerten als Differenz erster Ordnung definiert ist, eine Differenz zwischen den Differenzen erster Ordnung als Differenz zweiter Ordnung definiert ist und Differenzen höherer Ordnung von der Differenz zweiter Ordnung an aufwärts ähnlich definiert sind; und
das Summiermittel (15) angeordnet ist, um die berechneten Absolutwerte der Differenzen höherer Ordnung über die vorgeschriebene Zeitperiode hinweg zu summieren.

7. Verfahren zum Schätzen der Schwundfrequenz in einem Kommunikationssystem, mit einem Schritt zum:
Entspreizen eines vorgeschriebenen Codesignals von einem Empfangssignal; welches Verfahren **dadurch gekennzeichnet ist, dass** es ferner die Schritte umfasst:
Abtasten der Codesignalenergie bei dem Codesignal in vorgeschriebenen Zeitintervallen;
Berechnen von Absolutwerten von Differenzen zwischen miteinander benachbarten abgetasteten Energiewerten;
Summieren der berechneten Absolutwerte über eine vorgeschriebene Zeitperiode hinweg, um einen Summenwert zu erhalten; und
Schätzen einer Schwundfrequenz unter Verwendung des erhaltenen Summenwertes; welcher Schritt zum Schätzen der Schwundfrequenz enthält:
Berechnen, als Energiegefälle, eines Durchschnittswertes von Energiedifferenzcn pro vorgeschriebener Zeit von dem Summenwert und Erfassen einer Schwundfrequenz, die dem Durchschnittswert entspricht, von einer Entsprechungstabelle (16a), die eine entsprechende Beziehung zwischen dem Energiegefälle und der Schwundfrequenz speichert.

## Revendications

1. Appareil d'évaluation de la fréquence d'évanouissement dans un système de communication mobile AMRC, ledit appareil comprenant :
des moyens d'acquisition de signal de code (12 ; 31) destinés à acquérir un signal de code prescrit issu d'un signal de réception par désétalement; ledit appareil étant **caractérisé en ce qu'**il comprend en outre
des moyens d'échantillonnage de puissance (13, 61) destinés à échantillonner la puissance de signal de code issue du signal de code à intervalles de temps prescrits ;
des moyens de calcul (14) destinés à calculer des valeurs absolues de différences entre des valeurs de puissance échantillonnées mutuellement adjacentes ;
des moyens de totalisation (15) destinés à totaliser les valeurs absolues calculées des différences sur une période de temps prescrite ; et
des moyens d'évaluation de fréquence d'évanouissement (16) destinés à évaluer la fréquence d'évanouissement sur la base d'une valeur de totalisation issue desdits moyens de totalisation ; lesdits moyens d'évaluation de fréquence d'évanouissement (16) incluant :
un tableau de correspondance (16a) destiné à stocker une relation de correspondance entre la pente de puissance et la fréquence d'évanouissement ; et
une unité de calcul de fréquence d'évanouissement (16b, 16c) destinée à calculer, en tant que pente de puissance, une valeur moyenne de différences de puissance par temps prescrit à partir de la valeur de totalisation, et acquérir une fréquence d'évanouissement qui correspond à la valeur moyenne issue dudit tableau de correspondance.

2. Appareil selon la revendication 1, dans lequel lesdits moyens d'acquisition de signal de code (12) incluent :
des moyens (12b) destinés à acquérir un signal de code d'un canal pilote à partir du signal de réception par désétalement ; et
des moyens (18) destinés à acquérir une valeur d'évaluation de canal à partir du signal de code ; dans lequel
lesdits moyens d'échantillonnage de puissance (13, 61) sont agencés pour échantillonner la puissance du signal de code issue de la valeur d'évaluation de canal à intervalles de temps prescrits.

3. Appareil selon l'une quelconque des revendications précédentes, dans lequel ledit appareil comprend en outre des moyens (41, 42) destinés à faire varier l'intervalle de temps auquel la puissance de signal de code est échantillonnée et le temps de totalisation des valeurs absolues des différences.

4. Appareil selon l'une quelconque des revendications précédentes, dans lequel ledit appareil comprend en outre :
des moyens (62₁, 63₁ ; 62ₙ, 63ₘ) destinés à obtenir des valeurs de totalisation de valeurs absolues de différence de puissance par rapport à une pluralité de combinaisons des intervalles de temps d'échantillonnage et des temps de totalisation ;
des moyens (64₁, 64ₙ) destinés à évaluer les fréquences d'évanouissement sur la base des valeurs respectives des valeurs de totalisation ; et
des moyens (65) destinés à sélectionner la fréquence de la pluralité de fréquences d'évanouissement évaluées qui a la précision la plus élevées.

5. Appareil selon la revendication 1, dans lequel l'appareil comprend, pour chaque chemin de multiples chemins :
un dit moyen d'acquisition de signal de code (31₁ ... 31ₙ) ;
un dit moyen d'échantillonnage de puissance (13₁ ... 13ₙ) ;
un dit moyen de calcul (14₁ ... 14ₙ) ; et
un dit moyen de totalisation (15₁ ... 15ₙ) ;
et dans lequel ledit appareil comprend en outre :
des moyens (33) destinés à calculer une moyenne des valeurs de totalisation obtenues pour chacun des chemins ;
et dans lequel lesdits moyens d'évaluation de fréquence d'évanouissement (16) sont agencés pour évaluer la fréquence d'évanouissement sur la base de la moyenne des valeurs de totalisation ; et dans lequel ledit appareil comprend en outre
des moyens (32) destinés à faire varier le nombre de chemins des multiples chemins.

6. Appareil selon la revendication 1, dans lequel
les moyens de calcul (51) sont agencés pour calculer des différences d'ordre supérieur et pour calculer des valeurs absolues des différences d'ordre supérieur, où une différence entre des valeurs de puissance échantillonnées mutuellement adjacentes est définie comme étant une différence de premier ordre, une différence entre les différences de premier ordre est définie comme étant une différence de second ordre et les différences d'ordre supérieur à partir de la différences de second ordre sont définies de façon similaire ; et
les moyens de totalisation (15) sont agencés pour totaliser les valeurs absolues calculées des différences d'ordre supérieur sur la période de temps prescrite.

7. Procédé d'évaluation de la fréquence d'évanouissement dans un système de communication, comprenant une étape consistant à :
désétaler un signal de code prescrit à partir d'un signal de réception ; le procédé étant **caractérisé en ce qu'**il comprend les étapes supplémentaires consistant à
échantillonner la puissance de signal de code pour le signal de code à intervalles de temps prescrits ;
calculer les valeurs absolues de différences entre les valeurs de puissance échantillonnées mutuellement adjacentes ;
totaliser les valeurs absolues calculées sur une période de temps prescrite afin d'obtenir une valeur de totalisation ; et
évaluer une fréquence d'évanouissement utilisant la valeur de totalisation obtenue ; où l'étape d'évaluation de la fréquence d'évanouissement inclut
le calcul, en tant que pente de puissance, d'une valeur moyenne de différences de puissance par temps prescrit à partir de la valeur de totalisation, et l'acquisition d'une fréquence d'évanouissement qui correspond à la valeur moyenne issue d'un tableau de correspondance (16a) qui stocke une relation de correspondance entre la pente de puissance et la fréquence d'évanouissement.
